(19) Europäisches Patentamt
European Patent Office
Office européen des brevets

(11) EP 1 710 288 A1

(12) **EUROPEAN PATENT APPLICATION**

(43) Date of publication:
**11.10.2006 Bulletin 2006/41**

(51) Int Cl.:
***C09K 3/10*** *(2006.01)* ***C08L 77/00*** *(2006.01)*
***C08L 83/04*** *(2006.01)* ***C08L 67/02*** *(2006.01)*

(21) Application number: **05290759.9**

(22) Date of filing: **06.04.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(72) Inventors:
- **Otterstedt, Orvar E.**
  **1236 Cartigny (CH)**
- **Donis, Thierry**
  **75006 Paris (FR)**

(71) Applicant: **E.I. DU PONT DE NEMOURS AND COMPANY**
**Wilmington, DE 19898 (US)**

(74) Representative: **Hirsch & Associés**
**58, avenue Marceau**
**75008 Paris (FR)**

(54) **Sealing element**

(57) The invention provides a flexion seal made of a TPV, particularly for use in the automotive industry.

EP 1 710 288 A1

## Description

### Field of the invention

The invention relates to the field of seals, particularly seals made of thermoplastic vulcanisates.

### Background of the invention

A seal is a device for closing (sealing) a gap, or making a joint fluid-tight (the fluid being either gas or liquid). A seal is commonly a resilient (usually elastomeric) form that can conform tightly to two surfaces to form a fluid-tight joint. Seals can be divided into static and dynamic seals. A static seal is a seal designed for a use where there is no relative movement between the seal and the surfaces with which the seal interacts. A dynamic seal is a seal designed for use where there is relative movement between the seal and at least one of the surfaces with which it interacts, e.g. rotary movement of a shaft relative to a housing, or reciprocating movement of a rod or piston in a cylinder.

Seals at joints, particularly in the automotive industry, are conventionally made from vulcanised material (thermosets), such as rubber and high performance elastomers (Silicones, Vamac® , Viton® , etc.). Vulcanised materials must be moulded and then vulcanised to form cross-links. Use of a seal made of a vulcanisate in cooperation with a thermoplastic part or parts therefore requires several steps, including shaping the seal, vulcanisation and finally a step of assembly, whereby the seal must be assembled to the thermoplastic part or parts with which it will form a seal.

Thermoplastic vulcanisates (TPV's) are blends consisting of a continuous thermoplastic phase with a phase of vulcanised elastomer dispersed therein. TPVs combine many desirable characteristics of cross-linked rubbers with some characteristics of thermoplastic elastomers. An example of a TPV is disclosed in WO 2004/029155 (E.I. DuPont de Nemours), which discloses a curable thermoplastic blend comprising (a) from 15 to 60 wt% of a polyalkylene phthalate polyester polymer or copolymer and; (b) from 40 to 85 wt% of a cross- linkable poly(meth)acrylate or polyethylene/(meth) acrylate vulcanisate rubber in combination with an effective amount of peroxide free-radical initiator and an organic diene co-agent to cross-link the rubber during extrusion or injection moulding of the curable thermoplastic elastomeric blend. When the curable blend is melt extruded, the result is a TPV that can be processed in many ways like a thermoplastic, but which has the characteristics of a cross-linked rubber.

In contrast to conventional vulcanisates (thermosets), TPV's can be injection moulded, without further curing. This greatly facilitates the production of seals from TPV's. It also means that a seal formed from a TPV can be "overmoulded" with a thermoplastic part, using a two-step injection process. The thermoplastic is injected into the mould, with a partition preventing it from filling the part of the mould into which the TPV will be injected. The partition is then removed, and the TPV is injected into the remaining part of the mould. This forms a single part of two components: a structural thermoplastic part and a sealing part of TPV, in which the sealing part is integral with the structural thermoplastic part, thus eliminating an assembly step, and making a single piece.

However, TPV's suffer other drawbacks that limit their use in seals. Conventional seals in automotive uses are compression seals, such as so-called "O-ring" seals. The sealing force with a compression seal results exclusively from compression of the elastomeric material. TPV's suffer from poor compression set (in the order of or greater than 30%), meaning that a compression seal made of a TPV does not fully return to its original shape after compression, resulting in poor seal performance.

The problem of poor compression set is worsened at high temperature.

A need remains for seals made of materials that can be processed with the ease of a thermoplastic, and yet which can maintain seal performance over a prolonged period.

### Summary of the invention

In a first aspect, the invention provides a static seal made from polymer material comprising or consisting essentially of a TPV, wherein the TPV is selected from:

(1) a TPV comprising:

(A) from at or about 15 to 60 weight percent of a polyalkylene phthalate polyester polymer or copolymer continuous phase; and

(B) from at or about 40 to 85 weight percent of a polyethylene/(meth)acrylate rubber dispersed phase, wherein the rubber is dynamically cross-linked with a peroxide free radical initiator and an organic diene co-agent;

(2) a TPV comprising:

25 to 60% by weight of a polyamide resin and 75 to 40% by weight of a rubber component; said rubber component comprising 20 to 80% by weight of a hydrogenated nitrile group-containing rubber and 80 to 20% by weight of an acrylic rubber, said rubber component being dispersed in the form of cross-linked particles in said polyamide resin; said hydrogenated nitrile group-containing rubber being a hydrogenated copolymer containing 10 to 60% by weight of a vinyl nitrile, 15 to 90% by weight of a conjugated diene and 0 to 75% by weight of a monomer copolymerizable with vinyl nitrile and said conjugated diene, said hydrogenated nitrile-group containing rubber having an iodine value of 120 or less; said acrylic rubber being a copolymer of at least one acrylate selected from the group consisting of an alkyl acetate and an alkoxy-substituted alkyl acrylate with at least one compound selected from the group consisting of a nonconjugated diene, a conjugated diene, a dihydrodicyclopentadienyl group-containing (meth)acrylate, an epoxy group-containing ethylenically unsaturated compound, an active halogen-containing ethylenically unsaturated compound and a carboxyl group- containing ethylenically unsaturated compound;

(3) A TPV made by a method comprising:

(I) mixing:

(C) a rheologically stable polyamide resin having a melting point or glass transition temperature of 25° C to 275° C;
(D) a silicone base comprising (D') 100 parts by weight of a diorganopolysiloxane gum having a plasticity of at least 30 and having an average of at least 2 alkenyl groups in its molecule and (D") 5 to 200 parts by weight of a reinforcing filler, the weight ratio of said silicone base to said polyamide resin being greater than 35:65 to 85:15;
(E) for each 100 parts by weight of said polyamide resin, a compatibilizer selected from (i) from 0.1 to 5 parts by weight of a coupling agent having a molecular weight of less than 800 which contains at least two groups independently selected from ethylenically unsaturated group, epoxy, anhydride, silanol, carboxyl, hydroxyl, alkoxy, having 1 to 20 carbon atoms or oxazoline in its molecule, (ii) from 0.1 to 10 parts by weight of a functional diorganopolysiloxane having at least one group selected from epoxy, anhydride, silanol, carboxyl, amine, alkoxy having 1 to 20 carbon atoms or oxazoline in its molecule, or (iii) from 0.1 to 10 parts by weight of a copolymer comprising at least one diorganopolysiloxane block and at least one block selected from polyamide, polyether, polyurethane, polyurea, polycarbonate and polyacrylate;
(F) an organohydrido silicon compound which contains an average of at least 2 silicon-bonded hydrogen groups in its molecule; and
(G) a hydrosilation catalyst;

components (F) and (G) being present in an amount sufficient to cure said diorganopolysiloxane (D'); and
(II) dynamically curing said diorganopolysiloxane (D');

(4) A TPV made by a method comprising:

(I) mixing:

(H) a thermoplastic resin comprising more than 50 percent by volume of a polyester resin said thermoplastic resin having a softening point of 23° C to 300° C;

(I) a silicone elastomer comprising (I') 100 parts by weight of a diorganopolysiloxane gum having a plasticity of at least 30 and having an average of at least 2 alkenyl groups in its molecule and, optionally, (I") up to 200 parts by weight of a reinforcing filler, the weight ratio of said silicone elastomer to said thermoplastic resin is from 35:65 to 85:15;
(J) a glycidyl ester compatibilizer;
(K) an organohydrido silicon compound which contains an average of at least 2 silicon-bonded hydrogen groups in its molecule; and
(L) a hydrosilation catalyst;

components (K) and (L) being present in an amount sufficient to cure said diorganopolysiloxane (I'); and
(II) dynamically vulcanizing said diorganopolysiloxane (I');

(5) a TPV comprising:

- 20 to 70 wt% of a mixture (M) of two or more polyalkylene phthalates;
- 2 to 60 wt% of a cross-linked acrylate rubber;
- 0.5 to 20 wt% of an ionomer; and
- 1 to 30 wt% of a terpolymer of ethylene, butylacrylate (BA) and glycidylmethacrylate (GMA).

wherein the weight percentages are based on the sum of the above ingredients;

(6) A TPV comprising:

- 20 to 80 wt% of a mixture (M) of two or more polyalkylene phthalates;
- 2 to 60 wt% of a cross-linked acrylate rubber;
- 0 to 20 wt% of an ionomer; and
- 0 to 30 wt% of a terpolymer of ethylene, butylacrylate (BA) and glycidylmethacrylate (GMA).

wherein the weight percentages are based on the sum of the above ingredients;
AND

(7) mixtures of the above TPV's (1) to (6);

wherein the seal is a flexion seal.

In a second aspect, the invention provides a process for making a static flexion seal, comprising moulding, extruding or shaping a TPV to form a flexion seal, wherein the TPV is selected from:

(1) a TPV comprising:

(A) from at or about 15 to 60 weight percent of a polyalkylene phthalate polyester polymer or copolymer continuous phase; and
(B) from at or about 40 to 85 weight percent of a polyethylene/(meth)acrylate rubber dispersed phase, wherein the rubber is dynamically cross-linked with a peroxide free radical initiator and an organic diene co-agent;

(2) a TPV comprising:

25 to 60% by weight of a polyamide resin and 75 to 40% by weight of a rubber component; said rubber component comprising 20 to 80% by weight of a hydrogenated nitrile group-containing rubber and 80 to 20% by weight of an acrylic rubber, said rubber component being dispersed in the form of cross-linked particles in said polyamide resin; said hydrogenated nitrile group-containing rubber being a hydrogenated copolymer containing 10 to 60% by weight of a vinyl nitrile, 15 to 90% by weight of a conjugated diene and 0 to 75% by weight of a monomer copolymerizable with vinyl nitrile and said conjugated diene, said hydrogenated nitrile-group containing rubber having an iodine value of 120 or less; said acrylic rubber being a copolymer of at least one acrylate selected from the group consisting of an alkyl acetate and an alkoxy-substituted alkyl acrylate with at least one compound selected from the group consisting of a nonconjugated diene, a conjugated diene, a dihydrodicyclopentadienyl group-containing (meth)acrylate, an epoxy group-containing ethylenically unsaturated compound, an active halogen-containing ethylenically unsaturated compound and a carboxyl group- containing ethylenically unsaturated compound;

(3) A TPV made by a method comprising:

(I) mixing:

(C) a rheologically stable polyamide resin having a melting point or glass transition temperature of 25° C to 275° C;
(D) a silicone base comprising (D') 100 parts by weight of a diorganopolysiloxane gum having a plasticity of at least 30 and having an average of at least 2 alkenyl groups in its molecule and (D") 5 to 200 parts by weight of a reinforcing filler, the weight ratio of said silicone base to said polyamide resin being greater than 35:65 to 85:15;
(E) for each 100 parts by weight of said polyamide resin, a compatibilizer selected from (i) from 0.1 to 5 parts by weight of a coupling agent having a molecular weight of less than 800 which contains at least two groups independently selected from ethylenically unsaturated group, epoxy, anhydride, silanol, carboxyl,

hydroxyl, alkoxy, having 1 to 20 carbon atoms or oxazoline in its molecule, (ii) from 0.1 to 10 parts by weight of a functional diorganopolysiloxane having at least one group selected from epoxy, anhydride, silanol, carboxyl, amine, alkoxy having 1 to 20 carbon atoms or oxazoline in its molecule, or (iii) from 0.1 to 10 parts by weight of a copolymer comprising at least one diorganopolysiloxane block and at least one block selected from polyamide, polyether, polyurethane, polyurea, polycarbonate and polyacrylate;
(F) an organohydrido silicon compound which contains an average of at least 2 silicon-bonded hydrogen groups in its molecule; and
(G) a hydrosilation catalyst;

components (F) and (G) being present in an amount sufficient to cure said diorganopolysiloxane (D'); and
(II) dynamically curing said diorganopolysiloxane (D');

(4) A TPV made by a method comprising:

(I) mixing:

(H) a thermoplastic resin comprising more than 50 percent by volume of a polyester resin said thermoplastic resin having a softening point of 23° C to 300° C;
(I) a silicone elastomer comprising (I') 100 parts by weight of a diorganopolysiloxane gum having a plasticity of at least 30 and having an average of at least 2 alkenyl groups in its molecule and, optionally, (I") up to 200 parts by weight of a reinforcing filler, the weight ratio of said silicone elastomer to said thermoplastic resin is from 35:65 to 85:15;
(J) a glycidyl ester compatibilizer;
(K) an organohydrido silicon compound which contains an average of at least 2 silicon-bonded hydrogen groups in its molecule; and
(L) a hydrosilation catalyst;

components (K) and (L) being present in an amount sufficient to cure said diorganopolysiloxane (I'); and
(II) dynamically vulcanizing said diorganopolysiloxane (I');

(5) a TPV comprising:

- 20 to 70 wt% of a mixture (M) of two or more polyalkylene phthalates;
- 2 to 60 wt% of a cross-linked acrylate rubber;
- 0.5 to 20 wt% of an ionomer; and
- 1 to 30 wt% of a terpolymer of ethylene, butylacrylate (BA) and glycidylmethacrylate (GMA).

wherein the weight percentages are based on the sum of the above ingredients;

(6) A TPV comprising:

- 20 to 80 wt% of a mixture (M) of two or more polyalkylene phthalates;
- 2 to 60 wt% of a cross-linked acrylate rubber;
- 0 to 20 wt% of an ionomer; and
- 0 to 30 wt% of a terpolymer of ethylene, butylacrylate (BA) and glycidylmethacrylate (GMA).

wherein the weight percentages are based on the sum of the above ingredients.
AND

(7) mixtures of the above TPV's (1) to (6).

In a third aspect, the invention provides a dual component moulded article, comprising:

a first component made of a first polymer material; and
a sealing component comprising a static flexion seal made from polymer material comprising or consisting essentially of a TPV selected from:

(1) a TPV comprising:

(A) from at or about 15 to 60 weight percent of a polyalkylene phthalate polyester polymer or copolymer continuous phase; and
(B) from at or about 40 to 85 weight percent of a polyethylene/(meth)acrylate rubber dispersed phase, wherein the rubber is dynamically cross-linked with a peroxide free radical initiator and an organic diene co-agent;

(2) a TPV comprising:

25 to 60% by weight of a polyamide resin and 75 to 40% by weight of a rubber component; said rubber component comprising 20 to 80% by weight of a hydrogenated nitrile group-containing rubber and 80 to 20% by weight of an acrylic rubber, said rubber component being dispersed in the form of cross-linked particles in said polyamide resin; said hydrogenated nitrile group-containing rubber being a hydrogenated copolymer containing 10 to 60% by weight of a vinyl nitrile, 15 to 90% by weight of a conjugated diene and 0 to 75% by weight of a monomer copolymerizable with vinyl nitrile and said conjugated diene, said hydrogenated nitrile-group containing rubber having an iodine value of 120 or less; said acrylic rubber being a copolymer of at least one acrylate selected from the group consisting of an alkyl acetate and an alkoxy-substituted alkyl acrylate with at least one compound selected from the group consisting of a nonconjugated diene, a conjugated diene, a dihydrodicyclopentadienyl group-containing (meth)acrylate, an epoxy group-containing ethylenically unsaturated compound, an active halogen-containing ethylenically unsaturated compound and a carboxyl group- containing ethylenically unsaturated compound;

(3) A TPV made by a method comprising:

(I) mixing:

(C) a rheologically stable polyamide resin having a melting point or glass transition temperature of 25° C to 275° C;
(D) a silicone base comprising (D') 100 parts by weight of a diorganopolysiloxane gum having a plasticity of at least 30 and having an average of at least 2 alkenyl groups in its molecule and (D'') 5 to 200 parts by weight of a reinforcing filler, the weight ratio of said silicone base to said polyamide resin being greater than 35:65 to 85:15;
(E) for each 100 parts by weight of said polyamide resin, a compatibilizer selected from (i) from 0.1 to 5 parts by weight of a coupling agent having a molecular weight of less than 800 which contains at least two groups independently selected from ethylenically unsaturated group, epoxy, anhydride, silanol, carboxyl, hydroxyl, alkoxy, having 1 to 20 carbon atoms or oxazoline in its molecule, (ii) from 0.1 to 10 parts by weight of a functional diorganopolysiloxane having at least one group selected from epoxy, anhydride, silanol, carboxyl, amine, alkoxy having 1 to 20 carbon atoms or oxazoline in its molecule, or (iii) from 0.1 to 10 parts by weight of a copolymer comprising at least one diorganopolysiloxane block and at least one block selected from polyamide, polyether, polyurethane, polyurea, polycarbonate and polyacrylate;
(F) an organohydrido silicon compound which contains an average of at least 2 silicon-bonded hydrogen groups in its molecule; and
(G) a hydrosilation catalyst;

components (F) and (G) being present in an amount sufficient to cure said diorganopolysiloxane (D'); and
(II) dynamically curing said diorganopolysiloxane (D');

(4) A TPV made by a method comprising:

(I) mixing:

(H) a thermoplastic resin comprising more than 50 percent by volume of a polyester resin said thermoplastic resin having a softening point of 23° C to 300° C;
(I) a silicone elastomer comprising (I') 100 parts by weight of a diorganopolysiloxane gum having a plasticity of at least 30 and having an average of at least 2 alkenyl groups in its molecule and, optionally, (I'') up to 200 parts by weight of a reinforcing filler, the weight ratio of said silicone elastomer to said thermoplastic resin is from 35:65 to 85:15;
(J) a glycidyl ester compatibilizer;

(K) an organohydrido silicon compound which contains an average of at least 2 silicon-bonded hydrogen groups in its molecule; and
(L) a hydrosilation catalyst;

components (K) and (L) being present in an amount sufficient to cure said diorganopolysiloxane (I'); and
(II) dynamically vulcanizing said diorganopolysiloxane (I');

(5) a TPV comprising:

- 20 to 70 wt% of a mixture (M) of two or more polyalkylene phthalates;
- 2 to 60 wt% of a cross-linked acrylate rubber;
- 0.5 to 20 wt% of an ionomer; and
- 1 to 30 wt% of a terpolymer of ethylene, butylacrylate (BA) and glycidylmethacrylate (GMA).

wherein the weight percentages are based on the sum of the above ingredients;

(6) A TPV comprising:

- 20 to 80 wt% of a mixture (M) of two or more polyalkylene phthalates;
- 2 to 60 wt% of a cross-linked acrylate rubber;
- 0 to 20 wt% of an ionomer; and
- 0 to 30 wt% of a terpolymer of ethylene, butylacrylate (BA) and glycidylmethacrylate (GMA).

wherein the weight percentages are based on the sum of the above ingredients;
AND

(7) mixtures of the above TPV's (1) to (6);

wherein the structural component and the sealing component are joined together (preferably by overmoulding) to make an integral dual component moulded article.
In a fourth aspect, the invention provides a process for making a dual component moulded article, comprising the steps of:

injection moulding into a mould a first polymer material, to form a first component; and
injection moulding into the mould a TPV to form a sealing component, wherein the TPV is selected from:

(1) a TPV comprising:

(A) from at or about 15 to 60 weight percent of a polyalkylene phthalate polyester polymer or copolymer continuous phase; and
(B) from at or about 40 to 85 weight percent of a polyethylene/(meth)acrylate rubber dispersed phase, wherein the rubber is dynamically cross-linked with a peroxide free radical initiator and an organic diene co-agent;

(2) a TPV comprising:

25 to 60% by weight of a polyamide resin and 75 to 40% by weight of a rubber component; said rubber component comprising 20 to 80% by weight of a hydrogenated nitrile group-containing rubber and 80 to 20% by weight of an acrylic rubber, said rubber component being dispersed in the form of cross-linked particles in said polyamide resin; said hydrogenated nitrile group-containing rubber being a hydrogenated copolymer containing 10 to 60% by weight of a vinyl nitrile, 15 to 90% by weight of a conjugated diene and 0 to 75% by weight of a monomer copolymerizable with vinyl nitrile and said conjugated diene, said hydrogenated nitrile-group containing rubber having an iodine value of 120 or less; said acrylic rubber being a copolymer of at least one acrylate selected from the group consisting of an alkyl acetate and an alkoxy-substituted alkyl acrylate with at least one compound selected from the group consisting of a nonconjugated diene, a conjugated diene, a dihydrodicyclopentadienyl group-containing (meth)acrylate, an epoxy group-containing ethylenically unsaturated compound, an active halogen-containing ethylenically unsaturated compound and a carboxyl group- containing ethylenically unsaturated compound;

(3) A TPV made by a method comprising:

(I) mixing:

(C) a rheologically stable polyamide resin having a melting point or glass transition temperature of 25° C to 275° C;
(D) a silicone base comprising (D') 100 parts by weight of a diorganopolysiloxane gum having a plasticity of at least 30 and having an average of at least 2 alkenyl groups in its molecule and (D") 5 to 200 parts by weight of a reinforcing filler, the weight ratio of said silicone base to said polyamide resin being greater than 35:65 to 85:15;
(E) for each 100 parts by weight of said polyamide resin, a compatibilizer selected from (i) from 0.1 to 5 parts by weight of a coupling agent having a molecular weight of less than 800 which contains at least two groups independently selected from ethylenically unsaturated group, epoxy, anhydride, silanol, carboxyl, hydroxyl, alkoxy, having 1 to 20 carbon atoms or oxazoline in its molecule, (ii) from 0.1 to 10 parts by weight of a functional diorganopolysiloxane having at least one group selected from epoxy, anhydride, silanol, carboxyl, amine, alkoxy having 1 to 20 carbon atoms or oxazoline in its molecule, or (iii) from 0.1 to 10 parts by weight of a copolymer comprising at least one diorganopolysiloxane block and at least one block selected from polyamide, polyether, polyurethane, polyurea, polycarbonate and polyacrylate;
(F) an organohydrido silicon compound which contains an average of at least 2 silicon-bonded hydrogen groups in its molecule; and
(G) a hydrosilation catalyst;

components (F) and (G) being present in an amount sufficient to cure said diorganopolysiloxane (D'); and
(II) dynamically curing said diorganopolysiloxane (D');

(4) A TPV made by a method comprising:

(I) mixing:

(H) a thermoplastic resin comprising more than 50 percent by volume of a polyester resin said thermoplastic resin having a softening point of 23° C to 300° C;

(I) a silicone elastomer comprising (I') 100 parts by weight of a diorganopolysiloxane gum having a plasticity of at least 30 and having an average of at least 2 alkenyl groups in its molecule and, optionally, (I") up to 200 parts by weight of a reinforcing filler, the weight ratio of said silicone elastomer to said thermoplastic resin is from 35:65 to 85:15;

(J) a glycidyl ester compatibilizer;
(K) an organohydrido silicon compound which contains an average of at least 2 silicon-bonded hydrogen groups in its molecule; and
(L) a hydrosilation catalyst;
components (K) and (L) being present in an amount sufficient to cure said diorganopolysiloxane (I'); and

(II) dynamically vulcanizing said diorganopolysiloxane (I');

(5) a TPV comprising:

- 20 to 70 wt% of a mixture (M) of two or more polyalkylene phthalates;
- 2 to 60 wt% of a cross-linked acrylate rubber;
- 0.5 to 20 wt% of an ionomer; and
- 1 to 30 wt% of a terpolymer of ethylene, butylacrylate (BA) and glycidylmethacrylate (GMA).

wherein the weight percentages are based on the sum of the above ingredients;

(6) A TPV comprising:

- 20 to 80 wt% of a mixture (M) of two or more polyalkylene phthalates;
- 2 to 60 wt% of a cross-linked acrylate rubber;
- 0 to 20 wt% of an ionomer; and
- 0 to 30 wt% of a terpolymer of ethylene, butylacrylate (BA) and glycidylmethacrylate (GMA).

wherein the weight percentages are based on the sum of the above ingredients;
AND

(7) mixtures of the above TPV's (1) to (6).

**Detailed description of preferred embodiments**

**Brief description of the drawings**

Figure 1 illustrates the general principle of flexion seals.
Figure 2 shows three examples of flexion seals according to the invention.
Figure 3 shows a schematic of a lip seal, showing the angle alpha from the vertical.
Figure 4 shows a schematic of a lip seal having a boss.
Figure 5 shows a schematic of a lip seal arrangement in which a boss present on a part to which the seal is attached delimits deformation of the seal.
Figure 6 shows a schematic of a lip seal arrangement in which a boss present on the sealing surface delimits deformation of the seal.
Figure 7 shows schematically the principles of the compression test (A) and the flexion test (B).
Figure 8 shows the retained force after 50 hours at 150°C, for compression and flexion of two commercially available TPV's. Vertical lines: compression test for DuPont™ ETPV 90A01 HS; wavy lines: compression test for DuPont™ ETPV 60A01 HSL; dots: flexure test for DuPont™ ETPV 90A01 HS; flexure test for DuPont™ ETPV 60A01 HSL.

**Definitions**

**Copolymer** refers to polymers containing two or more monomers. In the case of a polymer derived from alternating essential co-monomers, such as polyalkylene terephthalate polyester and the like, the term "copolymer" is used to refer to the presence of at least one additional monomer other than the essential co-monomers.
**Terpolymer** means that the copolymer has at least three different comonomers.
**Vulcanisate** and the phrase "vulcanisate rubber" as used herein are intended to be generic to the cured or partially cured, cross-linked or cross-linkable rubber as well as curable precursors of cross-linked rubber and as such include elastomers, gum rubbers and so-called soft vulcanisates as commonly recognized in the art.
**Thermoplastic vulcanisate (TPV)** means blends of polymers consisting of a continuous thermoplastic phase with a phase of vulcanised elastomer dispersed therein. TPV's can be processed like thermoplastics (e.g. by moulding, extrusion and shaping).
**Organic diene co- agent** is intended to mean organic co-agents that contain two or more unsaturated double bonds.
**Acrylate** means an ester of acrylic acid with an alkyl group. Preferred in the invention are acrylates with alkyl groups having 1 to 4 carbon atoms.
The term "(meth)acrylic acid" refers to methacrylic acid and/or acrylic acid, inclusively. Likewise, the term "(meth)acrylate" means methacrylate and/or acrylate and "poly(meth)acrylate" means polymers derived from the polymerisation of either or a mixture of both corresponding type of monomers.
The expressions "rubber phase" and "thermoplastic phase" as used herein refer to and mean the polymeric morphological phases present in the resulting thermoplastic elastomeric blends derived from mixing and dynamic cross-linking of the cross-linkable acrylate rubber and the polyalkylene phthalate polyester starting materials, according to the method of the present invention.
**Compression set**: Compression set is a measurement of the ratio of elastic to viscous components of an elastomer's response to a given deformation. The cross-section is measured after the load is removed. Compression set is the percentage of the original thickness in the direction of the deformation that is not recovered, after a fixed time, under a specified load and at a specified temperature. This test may be conducted on cylindrical disks or O-rings. After compression by a standard load for a given period of time, the samples are removed and allowed to cool at room temperature for 30 minutes before measuring. After a load is released from an elastomer, the difference between the

final thickness in the direction of deformation and the original thickness in the direction of deformation is considered the compression set. Compression set is expressed a percentage, as follows:

$$\%CS = \frac{\text{Original thickness} - \text{Rebound thickness}}{\text{Original thickness}} \times 100$$

The lower the compression set, the more elastic the elastomer (i.e. an ideal elastomer returns to exactly its original volume after compression, and therefore has a compression set of 0%). Vulcanised rubbers typically have a compression set of 20%, thermoplastic vulcanisates are in the order of 30% or higher.

## Abbreviations

TPV: thermoplastic vulcanisate
LCP: liquid crystalline polymer
PET: polyethylene terephthalate
PBT: polybutylene terephthalate
PCT: Polycyclohexylenedimethylene Terephthalate
ABS: a copolymer of acrylonitrile, butadiene, and styrene
PVC: polyvinyl chloride

All documents referred to herein are incorporated by reference.

The inventors have surprisingly found that the problem of poor compression set of TPV, particularly at elevated temperatures (i.e. greater than at or about 150°C, particularly above at or about 175°C) can be overcome in making seals of TPV, by making flexion seals rather than compression seals. This permits the use of TPV's in making static seals in high temperature and oil exposed uses, such as the automotive industry, thereby allowing the reaping of the advantages of TPV's, such as the possibility of injection moulding without subsequent curing, in particular overmoulding. By using overmoulding, two different polymer materials can be made into a single piece. For example, a thermoplastic "hard" piece can be moulded as a single piece with a TPV sealing element, using a two-step injection process.

The expression "flexion seal" is meant to encompass any seal wherein the sealing surface is in the form of a flexible lip. The expression is equivalent with the expression "lip seal". Flexion seals employ a "hollow" section with a flexible lip or lips, as shown in Figure 1. The lip (1) of the flexion seal is assembled with a sealing surface (2) giving it a preload interface pressure of p. Fluid (gas or liquid) pressure (P) acting on the seal then increases the interface pressure to P + p. Typical seals of this type are the U-ring, V-ring and its variants, and seals with a single flexible lip, such as the C-ring and its derivatives. A flexion seal minimises the compression forces in favour of low strain. Hollow tubes may also act as flexion seals.

The TPV to be used in the flexion seal of the invention is selected from:

## Flexion seals comprising or consisting essentially of TPV (1)

In a preferred embodiment, the flexion seal of the invention comprises, or is made from TPV (1), which comprises:

(A) from at or about 15 to 60 weight percent of a polyalkylene phthalate polyester polymer or copolymer continuous phase and; (B) from at or about 40 to 85 weight percent of a polyethylene/(meth)acrylate rubber dispersed phase, wherein the rubber is dynamically cross-linked with a peroxide free radical initiator and an organic diene co-agent. Such TPV's are described in WO 2004/029155 (E.I. DuPont de Nemours).

In a preferred embodiment, the polyalkylene phthalate polyester polymer or copolymer (A) of the continuous phase of TPV (1) is selected from the group consisting of polyalkylene terephthalate, polyalkylene terephthalate copolymer, and a block copolyester elastomer, such as a copolyether-ester block copolymer elastomer or a copolyester-ester block copolymer elastomer.

In a further preferred embodiment, the organic diene co-agent in TPV (1) is selected from the group consisting

of diethylene glycol diacrylate, ethylene glycol dimethacrylate, diethylene glycol dimethacrylate, N,N'-m-phenylene dimaleimide, triallylisocyanurate, trimethylolpropane trimethacrylate, tetraallyloxyethane, triallyl cyanurate, tetramethylene diacrylate, polyethylene glycol dimethacrylate, and the like. Preferably the organic diene co-agent is selected from diethylene glycol diacrylate, diethylene glycol dimethacrylate, N,N'-m-phenylene dimaleimide, and triallylisocyanurate.
The free-radical initiator used in TPV (1) is preferably selected from the group consisting of 2,5-dimethyl-2,5-di-(*t*-butylperoxy)hexyne-3, *t*-butyl peroxybenzoate, 2,5-dimethyl-2,5-di-(*t*-butylperoxy)-2,5-dimethylhexane, dicumyl peroxide, $\alpha,\alpha$-bis(*t*-butylperoxy) 2,5-dimethylhexane, and the like. Preferred free-radical initiators are 2,5 dimethyl-2,5-di-(*t*-butylperoxy)hexyne-3; 2,5-dimethyl-2,5-di-(*t*-butylperoxy) hexane; or *t*-butyl peroxybenzoate.

In a particularly preferred embodiment, TPV (1) is as follows:

the polyalkylene phthalate polyester polymer or copolymer (A) is a block copolymer of segments of poly(butylene terephthalate) and segments of poly(tetramethylene glycol), the rubber (B) is an ethylene/methylacrylate copolymer elastomer, the peroxide free-radical initiator is 2,5-dimethyl-2,5-di-(t-butylperoxy) hexyne-3 and the organic diene co-agent is diethylene glycol dimethacrylate.
The specific combination of a block copolymer of segments of poly(butylene terephthalate) and segments of poly(tetramethylene glycol) along with an ethylene/methylacrylate copolymer elastomer, 2,5-dimethyl 2,5-di-(*t*-butylperoxy) hexyne-3 or 2,5-dimethyl-2,5-di-(*t*-butylperoxy) hexane free-radical initiator and diethylene glycol dimethacrylate co- agent produces a highly dispersed rubber phase with excellent properties.
In a particularly preferred embodiment, TPV (1) has the following composition:

25 wt % of a polyalkylene phthalate polyester polymer or copolymer which is a block copolymer of segments of poly (butylene terephthalate) and segments of poly(tetramethylene glycol);
75 wt % of a rubber which is an ethylene/methylacrylate copolymer elastomer;

wherein the rubber is dynamically cross-linked with a peroxide free-radical initiator which is 2,5-dimethyl-2,5-di-(t-butylperoxy) hexyne-3 and an organic diene co-agent which is diethylene glycol dimethacrylate.
In another particularly preferred embodiment, TPV(1) has the following composition:

50 wt % of a polyalkylene phthalate polyester polymer or copolymer which is a block copolymer of segments of poly (butylene terephthalate) and segments of poly(tetramethylene glycol);
50 wt % of a rubber which is an ethylene/methylacrylate copolymer elastomer;

wherein the rubber is dynamically cross-linked with a peroxide free-radical initiator which is 2,5-dimethyl-2,5-di-(t-butylperoxy) hexyne-3 and an organic diene co-agent which is diethylene glycol dimethacrylate.
The TPV may be compounded using processes such as those described in WO 2004/029155. An example is a process comprising the steps of:

(a) adding and admixing a cross-linkable polyethylene/(meth)acrylate vulcanisate rubber, a peroxide free-radical initiator and an organic diene co-agent in a melt extruder or melt blender at a temperature insufficient to promote significant cross-linking;
(b) adding a polyalkylene terephthalate polyester polymer or copolymer to the melt extruder or melt blender and admixing the polyalkylene terephthalate polyester polymer with the cross-linkable polyethylene/(meth)acrylate vulcanisate rubber prior to cross-linking;
(c) further mixing the cross-linkable polyethylene/(meth)acrylate vulcanisate rubber with peroxide free-radical initiator and an organic diene co-agent with the polyalkylene terephthalate polyester polymer or copolymer at conditions and temperature sufficient to cross-link the cross-linkable polyethylene/(meth)acrylate vulcanisate rubber; and
(d) recovering the TPV comprising from 15 to 60 weight percent of the polyalkylene terephthalate polyester polymer or copolymer as a continuous phase and from 40 to 85 weight percent of the polyethylene/(meth)acrylate vulcanisate rubber cross-linked with the peroxide free radical initiator and the organic diene co-agent as a disperse phase.

**Flexion seals comprising or consisting essentially of TPV (2)**

In a preferred embodiment, the flexion seal of the invention comprises, or is made from TPV (2), which comprises:

25 to 60% by weight of a polyamide resin and 75 to 40% by weight of a rubber component; said rubber component comprising 20 to 80% by weight of a hydrogenated nitrile group-containing rubber and 80 to 20% by weight of an acrylic rubber, said rubber component being dispersed in the form of cross-linked particles in said polyamide resin;

said hydrogenated nitrile group-containing rubber being a hydrogenated copolymer containing 10 to 60% by weight of a vinyl nitrile, 15 to 90% by weight of a conjugated diene and 0 to 75% by weight of a monomer copolymerizable with vinyl nitrile and said conjugated diene, said hydrogenated nitrile-group containing rubber having an iodine value of 120 or less; said acrylic rubber being a copolymer of at least one acrylate selected from the group consisting of an alkyl acetate and an alkoxy-substituted alkyl acrylate with at least one compound selected from the group consisting of a nonconjugated diene, a conjugated diene, a dihydrodicyclopentadienyl group-containing (meth)acrylate, an epoxy group-containing ethylenically unsaturated compound, an active halogen-containing ethylenically unsaturated compound and a carboxyl group- containing ethylenically unsaturated compound.

The polyamide resin in TPV (2) is preferably selected from polyamide resins polyamide resin having a melting point of at or about 160°C to at or about 250°C.

Preferably, the hydrogenated nitrile group-containing rubber of TPV (2) contains at least one functional group selected from the class consisting of a carboxyl group, an epoxy group, and a primary, secondary or tertiary amino group, in an amount of at least 5 X $10^{-3}$ molar equivalents per 100 g of the rubber.

Preferably, the acrylic rubber of TPV (2) contains at least one functional group selected from the class consisting of a carboxyl group and an epoxy group, in an amount of at least 1 X $10^{-2}$ molar equivalents per 100 g of the rubber.

Preferably, the cross-linked rubber particles of TPV (2) have a diameter of 5 μm or less.

Preferably, the cross-linked rubber particles of TPV (2) have a methyl ethyl ketone insoluble content of 80% by weight based on the amount of the whole rubber component.

Such TPV's are described in US patent no. 4,996,264.

**Flexion seals comprising or consisting essentially of TPV (3)**

In a preferred embodiment, the flexion seal of the invention comprises, or is made from TPV (3), which is made by a method comprising:

(I) mixing:

(C) a rheologically stable polyamide resin having a melting point or glass transition temperature of 25° C to 275° C;
(D) a silicone base comprising (D') 100 parts by weight of a diorganopolysiloxane gum having a plasticity of at least 30 and having an average of at least 2 alkenyl groups in its molecule and (D") 5 to 200 parts by weight of a reinforcing filler, the weight ratio of said silicone base to said polyamide resin being greater than 35:65 to 85:15;
(E) for each 100 parts by weight of said polyamide resin, a compatibilizer selected from (i) from 0.1 to 5 parts by weight of a coupling agent having a molecular weight of less than 800 which contains at least two groups independently selected from ethylenically unsaturated group, epoxy, anhydride, silanol, carboxyl, hydroxyl, alkoxy, having 1 to 20 carbon atoms or oxazoline in its molecule, (ii) from 0.1 to 10 parts by weight of a functional diorganopolysiloxane having at least one group selected from epoxy, anhydride, silanol, carboxyl, amine, alkoxy having 1 to 20 carbon atoms or oxazoline in its molecule, or (iii) from 0.1 to 10 parts by weight of a copolymer comprising at least one diorganopolysiloxane block and at least one block selected from polyamide, polyether, polyurethane, polyurea, polycarbonate and polyacrylate;
(F) an organohydrido silicon compound which contains an average of at least 2 silicon-bonded hydrogen groups in its molecule; and
(G) a hydrosilation catalyst;

components (F) and (G) being present in an amount sufficient to cure said diorganopolysiloxane (D'); and
(II) dynamically curing said diorganopolysiloxane (D');

In a preferred embodiment the weight ratio of said silicone base (D) to said polyamide resin (C) in TPV (3) is greater than at or about 35:65 to at or about 75:25. Preferably, the ratio is at or about 40:60 to at or about 70:30.

Preferably, the polyamide (C) in TPV (3) is selected from the group consisting of nylon 6, nylon 6/6, nylon 6/12 and nylon 12.

Preferably, the diorganopolysiloxane (D') is a gum selected from the group consisting of a copolymer consisting essentially of dimethylsiloxane units and methylvinylsiloxane units and a copolymer consisting essentially of dimethylsiloxane units and methylhexenylsiloxane units and said reinforcing filler (D") is a fumed silica.

Preferably, the organohydrido silicon component (F) is selected from the group consisting of a polymer consisting essentially of methylhydridosiloxane units and a copolymer consisting essentially of dimethylsiloxane units and methylhydridosiloxane units, having 0.5 to 1.7 weight percent hydrogen bonded to silicon and having a viscosity of 2 to 500 mPa-s at 25° C. and said catalyst (G) is a neutralized complex of platinous chloride and divinyltetramethyldisiloxane.

Preferably, the hindered phenol (E) has a molecular weight of less than 1,200 and contains 2 to 4 groups of the formula:

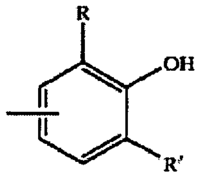

in which R and R' are tert-butyl groups. More preferably, the hindered phenol (E) is selected from the group consisting of triethyleneglycol bis (3- (3'-tert-butyl-4'-hydroxy-5'-methylphenyl)propionate), N,N'- hexamethylenebis(3,5-di-tert-butyl-4-hydroxyhydrocinnamamide) and tetrakis(methylene(3,5-di-tert-butyl-4-hydroxyhydrocinnamate))methane.

Examples of TPV's suitable as TPV (3) are described in US US patent no. 6,362,287.

**Flexion seals comprising or consisting essentially of TPV (4)**

In a preferred embodiment, the flexion seal of the invention comprises, or is made from TPV (4), which is made by a method comprising:

(I) mixing:

(H) a thermoplastic resin comprising more than 50 percent by volume of a polyester resin said thermoplastic resin having a softening point of 23° C to 300° C;

(I) a silicone elastomer comprising (I') 100 parts by weight of a diorganopolysiloxane gum having a plasticity of at least 30 and having an average of at least 2 alkenyl groups in its molecule and, optionally, (I") up to 200 parts by weight of a reinforcing filler, the weight ratio of said silicone elastomer to said thermoplastic resin is from 35: 65 to 85:15;
(J) a glycidyl ester compatibilizer;
(K) an organohydrido silicon compound which contains an average of at least 2 silicon-bonded hydrogen groups in its molecule; and
(L) a hydrosilation catalyst;

components (K) and (L) being present in an amount sufficient to cure said diorganopolysiloxane (I'); and
(II) dynamically vulcanizing said diorganopolysiloxane (I').

In a preferred embodiment, the polyester resin in TPV (4) is selected from poly(butylene terephthalate), poly (ethylene terephthalate), poly(trimethylene terephthalate), poly(ethylene naphthalate), poly(butylene naphthalate) or poly(cyclohexylenedimethylene terephthalate).

Preferably, in TPV (4), the diorganopolysiloxane (I') is a gum selected from a copolymer consisting essentially of dimethylsiloxane units and methylvinylsiloxane units or a copolymer consisting essentially of dimethylsiloxane units and methylhexenylsiloxane units, and said reinforcing filler (I") is a fumed silica.

Preferably, in TPV (4), the glycidyl ester compatibilizer (J) is a glycidyl ester polymer comprising repeating units of one or more glycidyl ester monomers. Particularly preferably, the glycidyl ester polymer comprises first repeating units derived from one or more glycidyl ester monomers and second repeating units derived from one or more alpha-olefin monomers. More preferably the glycidyl ester polymer is selected from olefin-glycidyl (meth)acrylate polymers, olefin-vinyl acetate-glycidyl (meth)acrylate polymers and olefin-glycidyl (meth) acrylate-alkyl (meth)acrylate polymers.

Preferably, in TPV (4), the organohydrido silicon component (K) is selected from the group consisting of a polymer consisting essentially of methylhydridosiloxane units and a copolymer consisting essentially of dimethylsiloxane units and methylhydridosiloxane units, having 0.5 to 1.7 weight percent hydrogen bonded to silicon and having a viscosity of 2 to 500 mPa·s at 25° C, and the catalyst (L) is a neutralized complex of platinous chloride and divinyltetramethyldisiloxane.

Preferably, in TPV (4), the weight ratio of said silicone elastomer (I) to said resin (H) is at or about 40:60 to at or about 70:30.

Examples of TPV's suitable as TPV (4) are described in US US patent no. 6,569,985.

**Flexion seals comprising or consisting essentially of TPV (5)**

In a preferred embodiment, the flexion seal of the invention comprises, or is made from TPV (5), which comprises:

- 20 to 70 wt% of a mixture (M) of two or more polyalkylene phthalates;
- 2 to 60 wt% of a cross-linked acrylate rubber;
- 0.5 to 20 wt% of an ionomer; and
- 1 to 30 wt% of a terpolymer of ethylene, butylacrylate (BA) and glycidylmethacrylate (GMA).

wherein the weight percentages are based on the sum of the above ingredients.

Preferably, in TPV (5), The mixture (M) may be a mixture of two components (M1) and (M2).

(M1) is a block copolyester elastomer, such as a copolyether-ester block copolymer elastomer or a copolyester-ester block copolymer elastomer. Copolyether-ester elastomers and copolyester-ester elastomers are described for example in US Patents 4,981,908, 5,824,421 and 5,731,380, the descriptions of which are incorporated herein by reference. Preferably (M1) is selected from block copolymers of poly(butylene terephthalate) and poly(tetramethylene glycol), block copolymers of poly(butylene terephthalate) and ethylene-oxide-capped poly(propylene glycol), and mixtures of such block copolymers. Most preferably (M1) is a block copolymer of segments of poly(butylene terephthalate) and segments of poly(tetramethylene glycol). Suitable block copolyester elastomers are sold under the tradenames Hytrel® (DuPont, Wilmington, USA) and Arnitel® (DSM, Netherlands). The block copolyester elastomer (A1) is preferably present at or about 5 to at or about 60 wt% with respect to the overall polymer blend.

(M2) is a poly(butylene terephthalate) (PBT). Preferably the PBT has a number average molecular weight of at least at or about 7500, most preferably greater than at or about 15000, but preferably less than at or about 150000. It is particularly preferred to use a PBT of number average molecular weight of at or about 25000. Suitable PBT component is sold under the tradenames Crastin® (DuPont, Wilmington, USA), Pocan® (Lanxess, Germany) and Arnite® (DSM, Netherlands). The PBT is preferably present at or about 2 to at or about 60 wt% with respect to the overall polymer blend.

Preferably the rubber in TPV (5) is selected from poly(meth)acrylate and a mixed polymer of ethylene and methyl acrylate, most preferably it is a mixed polymer of ethylene and methyl acrylate. The rubber is cross-linked with a free-radical initiator (such as an organic peroxide) and an organic diene coagent. Preferably the rubber is a mixed polymer of ethylene and methyl acrylate, derived from the copolymerisation of ethylene and 63 wt% methyl acrylate. Suitable rubber is sold under the trade name Vamac® (DuPont, Wilmington, USA).

The organic diene co-agent in TPV (5) is preferably selected from the group consisting of diethylene glycol diacrylate, ethylene glycol dimethacrylate, diethylene glycol dimethacrylate, N,N'-m-phenylene dimaleimide, triallylisocyanurate, trimethylolpropane trimethacrylate, tetraallyloxyethane, triallyl cyanurate, tetramethylene diacrylate, polyethylene glycol dimethacrylate, and the like. Preferably the organic diene co-agent is selected from diethylene glycol diacrylate, diethylene glycol dimethacrylate, N,N'-m-phenylene dimaleimide, and triallylisocyanurate. The organic diene co-agent is preferably present at or about 0.5-6 wt%, more preferably at or about 1.5-4 wt%, based on the rubber.

The free radical initiator in TPV (5) is preferably an organic peroxide. More preferably the peroxide is selected from the group consisting of 2,5-dimethyl-2,5-di-(t-butylperoxy)hexyne-3, *t*-butyl peroxybenzoate, 2,5-dimethyl-2,5-di-(*t*-butylperoxy)-2,5-dimethylhexane, dicumyl peroxide, $\alpha,\alpha$-bis(*t*-butylperoxy) 2,5-dimethylhexane, and the like. Preferred free-radical initiators are 2,5 dimethyl-2,5-di-(*t*-butylperoxy)hexyne-3; 2,5-dimethyl-2,5-di-(*t*-butylperoxy) hexane; and *t*-butyl peroxybenzoate. The free-radical initiator is preferably present at or about 0.5-3 wt%, more preferably at or about 0.75-2.5 wt%, based on the rubber.

In another preferred embodiment of the flexion seal made of TPV (5), the cross-linked or cross-linkable rubber comprises copolymers of ethylene and methyl acrylate together with at least one other monomer with a reactive chemical group which can be cross-linked. Particularly preferred are monomers with carboxylate groups, which can be cross-linked with a diamine cross-linking agent.

The ionomer in TPV (5) is preferably selected from random copolymers of ethylene and methacrylic acid [poly (ethylene-co-methacrylic acid)]. The acid moieties may be protonated, but are preferably neutralised from at or about 10 to 100 mol %, more preferably from at or about 25-80 mol %, particularly preferably at or about 30-70 mol%, with a counterion selected from $Na^+$ and $Zn^{++}$, with $Na^+$ preferred. A particularly preferred ionomer comprises 50 - 95% by weight of ethylene, 5 - 15% by weight of acrylic acid or methacrylic acid, and 0 - 35% by weight of a moiety selected from at least one of methyl acrylate, iso-butyl acrylate and *n*-butyl acrylate, and the acid groups are neutralized from 30

- 70% with a counterion of at least one metal ion selected from sodium and zinc, preferably sodium. Suitable ionomer may be purchased under the trade name Surlyn® (DuPont, Wilmington, USA).

The terpolymer in TPV (5) is preferably selected from terpolymers of ethylene, butylacrylate (BA) and glycidylmethacrylate (GMA), wherein the three components are present in at or about the following weight percentages: ethylene 50 - 98 wt %, BA 1 - 40wt%, and GMA 1 - 15 wt%. Particularly preferred is a terpolymer having the following composition: ethylene 55 - 88 wt %, BA 10 - 35 wt%, and GMA 2 - 10 wt%. Suitable terpolymer may be purchased under the trade name Elvaloy® (DuPont, Wilmington, USA).

Particularly preferably, the flexion seal of the invention is made from a TPV (5) having the following composition:

- at or about 12 to at or about 55 wt % copolyether-ester block copolymer elastomer, selected from block copolymers of poly(butylene terephthalate) and poly(tetramethylene glycol);
- at or about 2 to at or about 50 wt % PBT;
- at or about 2 to at or about 45 wt % of a mixed polymer of ethylene and methyl acrylate, dynamically cross-linked with a free radical initiator and an organic diene co-agent;
- at or about 0.5 to at or about 12 wt % of an ionomer selected from random copolymers of 50 - 95% by weight of ethylene (preferably 60 - 85 wt%), 5 - 15% (preferably 7-13 wt%) by weight of acrylic acid or methacrylic acid, and 0 - 35% by weight of *n*-butyl acrylate (preferably 10 - 25 wt%), the acid moieties being neutralised from at or about 25 to 80 mol %, more preferably at or about 30 to 70 mol % with a counterion selected from $Na^+$ and $Zn^{++}$, more preferably $Na^+$; and
- at or about 1 to at or about 25 wt % of a terpolymer of 50 - 98 wt% ethylene, 1 - 40wt% *n*-butyl acrylate, and 1 - 15 wt% glycidylmethacrylate ;

wherein the sum of copolyether-ester block copolymer elastomer and PBT is from at or about 45 to at or about 65 wt %.

**Flexion seals comprising or consisting essentially of TPV (6)**

In a preferred embodiment, the flexion seal of the invention comprises, or is made from TPV (6), which comprises:

- 20 to 80 wt% of a mixture (M) of two or more polyalkylene phthalates;
- 2 to 60 wt% of a cross-linked acrylate rubber;
- 0 to 20 wt% of an ionomer; and
- 0 to 30 wt% of a terpolymer of ethylene, butylacrylate (BA) and glycidylmethacrylate (GMA).

wherein the weight percentages are based on the sum of the above ingredients.

Preferred constituents for TPV (6) are as described above for TPV (5).

**Flexion seals comprising a mixture of TPV's (1) to (6)**

The TPV's listed above as (1) to (6) may be mixed in any proportion. Particularly preferred mixtures are TPV's (1) and (5), TPV's (1) and (6), TPV's (1), (5) and (6), and TPV's (2) and (3).

**Preferred embodiments of the seal of the invention**

The flexion seal of the invention may be made with any moulding, extruding or shaping technique that can be used with a TPV. Particularly preferred is injection moulding.

In a preferred embodiment, the flexion seal of the invention is "overmoulded" with another thermoplastic part made from a polymer different from the TPV of the sealing part. In this way a dual component moulded article is made. For example, a structural component of a non-elastomeric or less-elastomeric polymer can be integrally moulded ("overmoulded") with a sealing component made of a static flexion seal of the TPV. In such an overmoulded part, if the other thermoplastic component is to serve a structural function, it is preferred that it have an elastic modulus greater than that of the TPV flexion seal component. The non-elastomeric or less elastomeric thermoplastic may comprise or be selected from, for example, nylon, polyacetal, LCP, PET, PBT, PCT, copolyetherester block copolymer elastomers, polycarbonate, ABS, polyvinyl chloride, polyolefins (such as polypropylene and polyethylene), and mixtures of these. The non-elastomeric or less elastomeric thermoplastic is injected into a mould, so as to partially fill the mould, i.e. by placing gates in the mould. Immediately thereafter, the TPV is injected to fill the unfilled part of the mould (these steps can also be reversed, although it is preferable to inject the TPV second). In this way an integral part is formed, in which the flexion sealing member is integrally moulded with the less elastomeric structural polymer.

In such overmoulded dual component parts, it is preferable that the first polymer material and the TPV component

be chemically compatible so that bonding between the two components is maximised. For example, TPV (1) pairs well with polyesters, such as PET, PBT, PCT and LCP, and copolyetheresters. TPV (2) and TPV (3) pair well with polyamides. TPV (4), TPV (5) and TPV (6) pair well with polyesters, such as PET, PBT, PCT and LCP, and copolyetheresters.

Examples of flexion seals are disclosed, for example, in US2004/0056427A1, US6,559,633 and WO 03/089772.

In a preferred embodiment, the flexion seal of the invention is used in any environment where heat and/or oil resistance are required, particularly internal combustion engines, more particularly in the automotive industry, particularly under the hood and in and around the engine of a motor vehicle.

Examples of where such seals can be used include in air intake systems, engine cooling systems, power steering systems, exhaust systems, fuel systems, air conditioning systems, oil systems, brake systems, compressed air systems, electrical systems (e.g. automotive system sensors), vacuum systems and hydraulic systems.

Figure 2 shows some examples of flexion seals. The numeral (2) designates the sealing surface.

A schematic of a lip seal is shown in Figure 3. In a preferred embodiment, the angle "alpha" between the vertical and the lip is at or about 30° to at or about 60°, more preferably at or about 40° to at or about 50°, particularly preferably at or about 45°. A 45° angle optimises the seal force.

In a preferred embodiment, a boss is added to the seal. One example of this is shown in Figure 4. According to the preferred embodiment shown in Figure 4, boss (3) limits the maximum seal deformation, thereby reducing plastic strain on the material when sealing surface (2) is applied to the seal.

In an additional preferred embodiment, shown in Figure 5, the boss (3) may be present on a rigid component to which the seal is moulded or attached, thus limiting the strain on the seal when surface (2) is applied to the seal. The sealing force is shown with the large downward arrow.

In another preferred embodiment, shown in Figure 6, the boss (3) may be present on the sealing surface (2). The sealing force is shown with the large downward arrow.

## Examples

Test pieces were made of TPV and subjected to the following tests to demonstrate the improved behaviour of TPV when subjected to flexure forces as in a flexion seal, as compared to compression forces, as in a compression seal.

Compression testing was according to ASTM D 395-B-2. The general principle is shown in Figure 7 (A). The samples of TPV were die cut from plates into disks of diameter 26 X thickness 2 mm. Three of these disks were stacked, for a total thickness of 6 mm. A force (F) was applied to the sample to reduce the thickness by 25%. The required force was the initial sealing force. The sample was maintained under compression for 50 hours at 150°C. Over time, the force required to maintain the 25% reduction in thickness decreased. At the end of 50 hours, the force (F) was noted. The retained force was recorded as a percentage of the initial force. Two commercially available TPV's were tested: DuPont™ ETPV 90A01 HS and DuPont™ ETPV 60A01HSL. After 50 hours at 150°C the retained force was 15% and 19% of the initial force, respectively.

Flexion testing was done as follows: The general principle of the assay is shown in Figure 7 (B). The samples were strips of TPV having the dimensions 80 X 10 X 2 mm. Two of these strips were stacked, giving a total thickness of 4 mm. The span [s in Figure 7 (B)] was 50 mm. A lateral force (F) was applied to the sample until a 10 mm flexion (deflection) was reached. The required force was the initial sealing force. The flexion was maintained for 50 hours at 150°C. At the end of 50 hours, the force (F) was noted. The retained force was recorded as a percentage of the initial force. Two commercially available TPV's were tested: DuPont™ ETPV 90A01H5 and DuPont™ ETPV 60A01 HSL. After 50 hours at 150°C the retained flexural force was 59% and 78% of the initial force, respectively.

These results are shown graphically as a bar chart in Figure 8, which shows the retained sealing force after 50 hours at 150°C. The bar filled with vertical lines shows the retained sealing force for the compression test for DuPont™ ETPV 90A01 HS (15%), which can be compared with the bar filled with dots which shows the retained sealing force for the same material under the flexure test (59%). The bar filled with wavy lines shows the retained sealing force for DuPont™ ETPV 60A01 HSL for the compression test (19%), which can be compared with the bar filled with cross-hatches (or checks) which shows the retained force for the same material under the flexure test (78%). Clearly the retained sealing force is significantly higher for both TPV's under flexural force.

## Claims

**1.** A static seal made of polymer material comprising a TPV, wherein the TPV is selected from:

(1) a TPV comprising:

(A) from at or about 15 to 60 weight percent of a polyalkylene phthalate polyester polymer or copolymer

continuous phase; and
(B) from at or about 40 to 85 weight percent of a polyethylene/(meth)acrylate rubber dispersed phase, wherein the rubber is dynamically cross-linked with a peroxide free radical initiator and an organic diene co-agent;

(2) a TPV comprising:

25 to 60% by weight of a polyamide resin and 75 to 40% by weight of a rubber component; said rubber component comprising 20 to 80% by weight of a hydrogenated nitrile group-containing rubber and 80 to 20% by weight of an acrylic rubber, said rubber component being dispersed in the form of cross-linked particles in said polyamide resin; said hydrogenated nitrile group-containing rubber being a hydrogenated copolymer containing 10 to 60% by weight of a vinyl nitrile, 15 to 90% by weight of a conjugated diene and 0 to 75% by weight of a monomer copolymerizable with vinyl nitrile and said conjugated diene, said hydrogenated nitrile-group containing rubber having an iodine value of 120 or less; said acrylic rubber being a copolymer of at least one acrylate selected from the group consisting of an alkyl acetate and an alkoxy-substituted alkyl acrylate with at least one compound selected from the group consisting of a nonconjugated diene, a conjugated diene, a dihydrodicyclopentadienyl group-containing (meth)acrylate, an epoxy group-containing ethylenically unsaturated compound, an active halogen-containing ethylenically unsaturated compound and a carboxyl group- containing ethylenically unsaturated compound;

(3) A TPV made by a method comprising:

(I) mixing:

(C) a rheologically stable polyamide resin having a melting point or glass transition temperature of 25° C to 275° C;
(D) a silicone base comprising (D') 100 parts by weight of a diorganopolysiloxane gum having a plasticity of at least 30 and having an average of at least 2 alkenyl groups in its molecule and (D") 5 to 200 parts by weight of a reinforcing filler, the weight ratio of said silicone base to said polyamide resin being greater than 35:65 to 85:15;
(E) for each 100 parts by weight of said polyamide resin, a compatibilizer selected from (i) from 0.1 to 5 parts by weight of a coupling agent having a molecular weight of less than 800 which contains at least two groups independently selected from ethylenically unsaturated group, epoxy, anhydride, silanol, carboxyl, hydroxyl, alkoxy, having 1 to 20 carbon atoms or oxazoline in its molecule, (ii) from 0.1 to 10 parts by weight of a functional diorganopolysiloxane having at least one group selected from epoxy, anhydride, silanol, carboxyl, amine, alkoxy having 1 to 20 carbon atoms or oxazoline in its molecule, or (iii) from 0.1 to 10 parts by weight of a copolymer comprising at least one diorganopolysiloxane block and at least one block selected from polyamide, polyether, polyurethane, polyurea, polycarbonate and polyacrylate;
(F) an organohydrido silicon compound which contains an average of at least 2 silicon-bonded hydrogen groups in its molecule; and
(G) a hydrosilation catalyst;

components (F) and (G) being present in an amount sufficient to cure said diorganopolysiloxane (D'); and
(II) dynamically curing said diorganopolysiloxane (D');

(4) A TPV made by a method comprising:

(I) mixing:

(H) a thermoplastic resin comprising more than 50 percent by volume of a polyester resin said thermoplastic resin having a softening point of 23° C to 300° C;
(I) a silicone elastomer comprising (I') 100 parts by weight of a diorganopolysiloxane gum having a plasticity of at least 30 and having an average of at least 2 alkenyl groups in its molecule and, optionally, (I") up to 200 parts by weight of a reinforcing filler, the weight ratio of said silicone elastomer to said thermoplastic resin is from 35:65 to 85:15;

(J) a glycidyl ester compatibilizer;

(K) an organohydrido silicon compound which contains an average of at least 2 silicon-bonded hydrogen groups in its molecule; and
(L) a hydrosilation catalyst;
components (K) and (L) being present in an amount sufficient to cure said diorganopolysiloxane (I'); and

(II) dynamically vulcanizing said diorganopolysiloxane (I');

(5) a TPV comprising:

- 20 to 70 wt% of a mixture (M) of two or more polyalkylene phthalates;
- 2 to 60 wt% of a cross-linked acrylate rubber;
- 0.5 to 20 wt% of an ionomer; and
- 1 to 30 wt% of a terpolymer of ethylene, butylacrylate (BA) and glycidylmethacrylate (GMA).

wherein the weight percentages are based on the sum of the above ingredients;
(6) A TPV comprising:

- 20 to 80 wt% of a mixture (M) of two or more polyalkylene phthalates;
- 2 to 60 wt% of a cross-linked acrylate rubber;
- 0 to 20 wt% of an ionomer; and
- 0 to 30 wt% of a terpolymer of ethylene, butylacrylate (BA) and glycidylmethacrylate (GMA).

wherein the weight percentages are based on the sum of the above ingredients;
AND
(7) mixtures of the above TPV's (1) to (6);

wherein the seal is a flexion seal.

**2.** The static seal of claim 1, comprising TPV (1), wherein the polyalkylene phthalate polyester polymer or copolymer (A) of the continuous phase of the TPV (1) is selected from the group consisting of polyalkylene terephthalate, polyalkylene terephthalate copolymer, and a copolyether-ester block copolymer elastomer or a copolyester-ester block copolymer elastomer.

**3.** The static seal of claim 1 or 2, comprising TPV (1), wherein the organic diene co-agent is selected from diethylene glycol diacrylate, diethylene glycol dimethacrylate, N,N'-m-phenylene dimaleimide, and triallylisocyanurate.

**4.** The static seal of claim 1, 2 or 3, comprising TPV (1) wherein the free-radical initiator is selected from 2,5 dimethyl-2,5-di-(*t*-butylperoxy)hexyne-3; 2,5-dimethyl-2,5-di-(*t*-butylperoxy) hexane; or *t*-butyl peroxybenzoate.

**5.** The static seal of any one preceding claim, comprising TPV (1), wherein the TPV is as follows:

the polyalkylene phthalate polyester polymer or copolymer (A) is a block copolymer of segments of poly(butylene terephthalate) and segments of poly(tetramethylene glycol), the rubber (B) is an ethylene/methylacrylate copolymer elastomer, the peroxide free-radical initiator is 2,5-dimethyl-2,5-di-(t-butylperoxy) hexyne-3 and the organic diene co-agent is diethylene glycol dimethacrylate.

**6.** The static seal of any one preceding claim, having a boss which limits the maximum seal deformation, thereby reducing plastic strain on the material.

**7.** A process for making a static flexion seal, comprising the step of moulding, extruding or shaping a TPV to form a flexion seal, wherein the TPV comprises:

(A) from at or about 15 to 60 weight percent of a polyalkylene phthalate polyester polymer or copolymer continuous phase; and
(B) from at or about 40 to 85 weight percent of a polyethylene/(meth)acrylate rubber dispersed phase, wherein the rubber is dynamically cross-linked with a peroxide free radical initiator and an organic diene co-agent.

**8.** The process of claim 7, comprising the step of injection moulding.

**9.** A dual component moulded article, comprising:

a first component made of a first polymer material; and
a sealing component comprising a static flexion seal made of a TPV, wherein the TPV is selected from:

(1) a TPV comprising:

(A) from at or about 15 to 60 weight percent of a polyalkylene phthalate polyester polymer or copolymer continuous phase; and
(B) from at or about 40 to 85 weight percent of a polyethylene/(meth)acrylate rubber dispersed phase, wherein the rubber is dynamically cross-linked with a peroxide free radical initiator and an organic diene co-agent;

(2) a TPV comprising:

25 to 60% by weight of a polyamide resin and 75 to 40% by weight of a rubber component; said rubber component comprising 20 to 80% by weight of a hydrogenated nitrile group-containing rubber and 80 to 20% by weight of an acrylic rubber, said rubber component being dispersed in the form of cross-linked particles in said polyamide resin; said hydrogenated nitrile group-containing rubber being a hydrogenated copolymer containing 10 to 60% by weight of a vinyl nitrile, 15 to 90% by weight of a conjugated diene and 0 to 75% by weight of a monomer copolymerizable with vinyl nitrile and said conjugated diene, said hydrogenated nitrile-group containing rubber having an iodine value of 120 or less; said acrylic rubber being a copolymer of at least one acrylate selected from the group consisting of an alkyl acetate and an alkoxy-substituted alkyl acrylate with at least one compound selected from the group consisting of a nonconjugated diene, a conjugated diene, a dihydrodicyclopentadienyl group-containing (meth)acrylate, an epoxy group-containing ethylenically unsaturated compound, an active halogen- containing ethylenically unsaturated compound and a carboxyl group- containing ethylenically unsaturated compound;

(3) A TPV made by a method comprising:

(I) mixing:

(C) a rheologically stable polyamide resin having a melting point or glass transition temperature of 25° C to 275° C;
(D) a silicone base comprising (D') 100 parts by weight of a diorganopolysiloxane gum having a plasticity of at least 30 and having an average of at least 2 alkenyl groups in its molecule and (D") 5 to 200 parts by weight of a reinforcing filler, the weight ratio of said silicone base to said polyamide resin being greater than 35:65 to 85:15;
(E) for each 100 parts by weight of said polyamide resin, a compatibilizer selected from (i) from 0.1 to 5 parts by weight of a coupling agent having a molecular weight of less than 800 which contains at least two groups independently selected from ethylenically unsaturated group, epoxy, anhydride, silanol, carboxyl, hydroxyl, alkoxy, having 1 to 20 carbon atoms or oxazoline in its molecule, (ii) from 0.1 to 10 parts by weight of a functional diorganopolysiloxane having at least one group selected from epoxy, anhydride, silanol, carboxyl, amine, alkoxy having 1 to 20 carbon atoms or oxazoline in its molecule, or (iii) from 0.1 to 10 parts by weight of a copolymer comprising at least one diorganopolysiloxane block and at least one block selected from polyamide, polyether, polyurethane, polyurea, polycarbonate and polyacrylate;
(F) an organohydrido silicon compound which contains an average of at least 2 silicon-bonded hydrogen groups in its molecule; and
(G) a hydrosilation catalyst;

components (F) and (G) being present in an amount sufficient to cure said diorganopolysiloxane (D'); and
(II) dynamically curing said diorganopolysiloxane (D');

(4) A TPV made by a method comprising:

(I) mixing:

(H) a thermoplastic resin comprising more than 50 percent by volume of a polyester resin said thermoplastic resin having a softening point of 23° C to 300° C;
(I) a silicone elastomer comprising (I') 100 parts by weight of a diorganopolysiloxane gum having a plasticity of at least 30 and having an average of at least 2 alkenyl groups in its molecule and, optionally, (I") up to 200 parts by weight of a reinforcing filler, the weight ratio of said silicone elastomer to said thermoplastic resin is from 35:65 to 85:15;
(J) a glycidyl ester compatibilizer;
(K) an organohydrido silicon compound which contains an average of at least 2 silicon-bonded hydrogen groups in its molecule; and
(L) a hydrosilation catalyst;

components (K) and (L) being present in an amount sufficient to cure said diorganopolysiloxane (I'); and
(II) dynamically vulcanizing said diorganopolysiloxane (I')

(5) a TPV comprising:

- 20 to 70 wt% of a mixture (M) of two or more polyalkylene phthalates;
- 2 to 60 wt% of a cross-linked acrylate rubber;
- 0.5 to 20 wt% of an ionomer; and
- 1 to 30 wt% of a terpolymer of ethylene, butylacrylate (BA) and glycidylmethacrylate (GMA).

wherein the weight percentages are based on the sum of the above ingredients;
(6) A TPV comprising:

- 20 to 80 wt% of a mixture (M) of two or more polyalkylene phthalates;
- 2 to 60 wt% of a cross-linked acrylate rubber;
- 0 to 20 wt% of an ionomer; and
- 0 to 30 wt% of a terpolymer of ethylene, butylacrylate (BA) and glycidylmethacrylate (GMA).

wherein the weight percentages are based on the sum of the above ingredients;
AND
(7) mixtures of the above TPV's (1) to (6).

**10.** The dual component moulded article of claim 9, wherein the first component comprises polymer material selected from nylon, LCP, PET, PBT, PCT, polycarbonate, PVC, ABS, polyethylene, polypropylene, and mixtures of these.

**11.** The dual component moulded article of claim 9 or 10, comprising TPV (1),
wherein the polyalkylene phthalate polyester polymer or copolymer (A) of the continuous phase of the TPV is selected from the group consisting of polyalkylene terephthalate, polyalkylene terephthalate copolymer, and a copolyether-ester block copolymer elastomer or a copolyester-ester block copolymer elastomer.

**12.** The dual component moulded article of claim 9, 10 or 11, comprising TPV (1),
wherein the organic diene co-agent is selected from diethylene glycol diacrylate, diethylene glycol dimethacrylate, N,N'-m-phenylene dimaleimide, and triallylisocyanurate.

**13.** The dual component moulded article of any one of claims 9 to 12, comprising TPV (1), wherein the free-radical initiator is selected from 2,5 dimethyl-2,5-di-(*t*-butylperoxy)hexyne-3; 2,5-dimethyl-2,5-di-(*t*-butylperoxy) hexane; or *t*-butyl peroxybenzoate.

**14.** The dual component moulded article of any one of claims 9 to 13, Comprising TPV (1), wherein the TPV is as follows:

the polyalkylene phthalate polyester polymer or copolymer (A) is a block copolymer of segments of poly(butylene terephthalate) and segments of poly(tetramethylene glycol), the rubber (B) is an ethylene/methylacrylate copolymer elastomer, the peroxide free-radical initiator is 2,5-dimethyl-2,5-di-(t-butylperoxy) hexyne-3 and the organic diene co-agent is diethylene glycol dimethacrylate.

**15.** A process for making a dual component moulded article, comprising the steps of:

injection moulding into a mould a first polymer material to form a first component; and
injection moulding into the mould a TPV to form a sealing component, wherein the TPV comprises:

(A) from at or about 15 to 60 weight percent of a polyalkylene phthalate polyester polymer or copolymer continuous phase; and
(B) from at or about 40 to 85 weight percent of a polyethylene/(meth)acrylate rubber dispersed phase, wherein the rubber is dynamically cross-linked with a peroxide free radical initiator and an organic diene co-agent;

so as to form an integral dual component moulded article.

**16.** The process of claim 15, wherein the first component comprises polymer material selected from nylon, LCP, PET, PBT, PCT, polycarbonate, ABS, PVC, polyethylene, polypropylene, and mixtures of these.

**17.** The process of claim 15 or 16, wherein the polyalkylene phthalate polyester polymer or copolymer (A) of the continuous phase of the TPV is selected from the group consisting of polyalkylene terephthalate, polyalkylene terephthalate copolymer, and a copolyether-ester block copolymer elastomer or a copolyester-ester block copolymer elastomer.

**18.** The process of claim 15, 16 or 17, wherein the organic diene co-agent is selected from diethylene glycol diacrylate, diethylene glycol dimethacrylate, N,N'-m-phenylene dimaleimide, and triallylisocyanurate.

**19.** The process of any one of claims 15 to 18, wherein the free-radical initiator is selected from 2,5 dimethyl-2,5-di-(*t*-butylperoxy)hexyne-3; 2,5-dimethyl-2,5-di-(*t*-butylperoxy) hexane; or *t*-butyl peroxybenzoate.

**20.** The process of any one of claims 15 to 19, wherein the TPV is as follows:

the polyalkylene phthalate polyester polymer or copolymer (A) is a block copolymer of segments of poly(butylene terephthalate) and segments of poly(tetramethylene glycol), the rubber (B) is an ethylene/methylacrylate copolymer elastomer, the peroxide free-radical initiator is 2,5-dimethyl-2,5-di-(t-butylperoxy) hexyne-3 and the organic diene co-agent is diethylene glycol dimethacrylate.

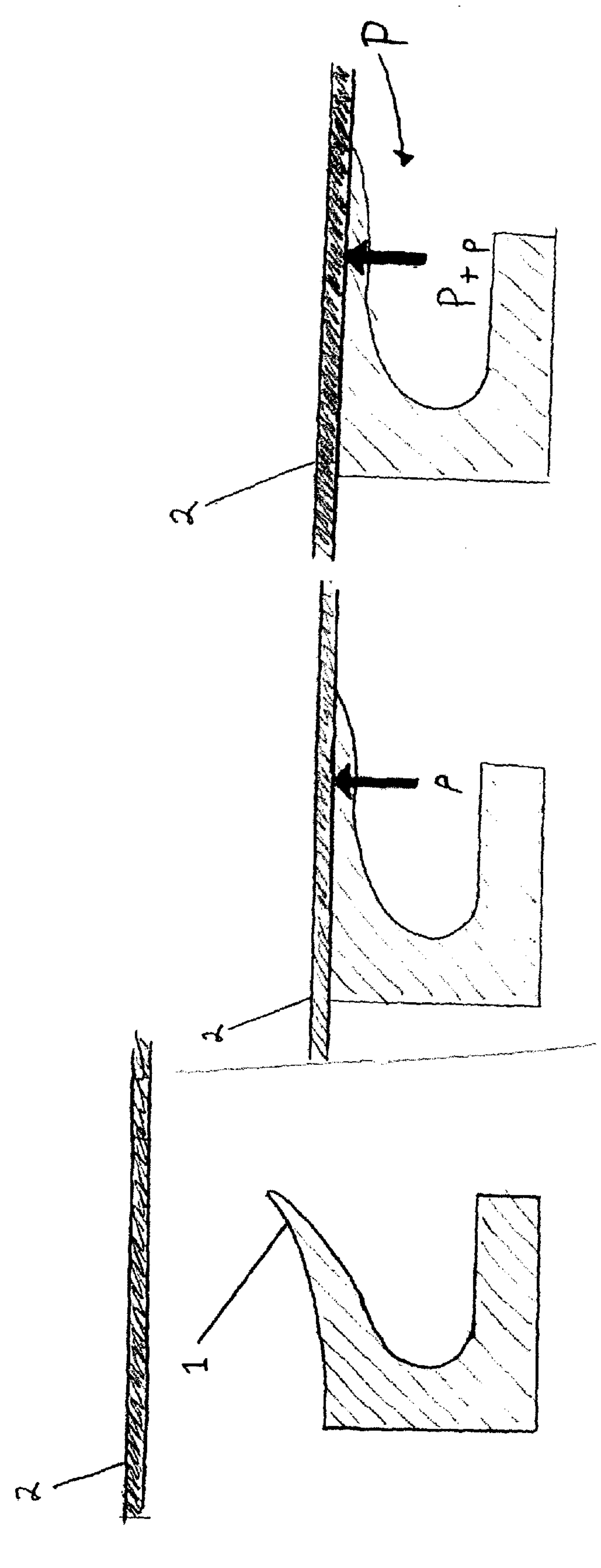


Figure 1

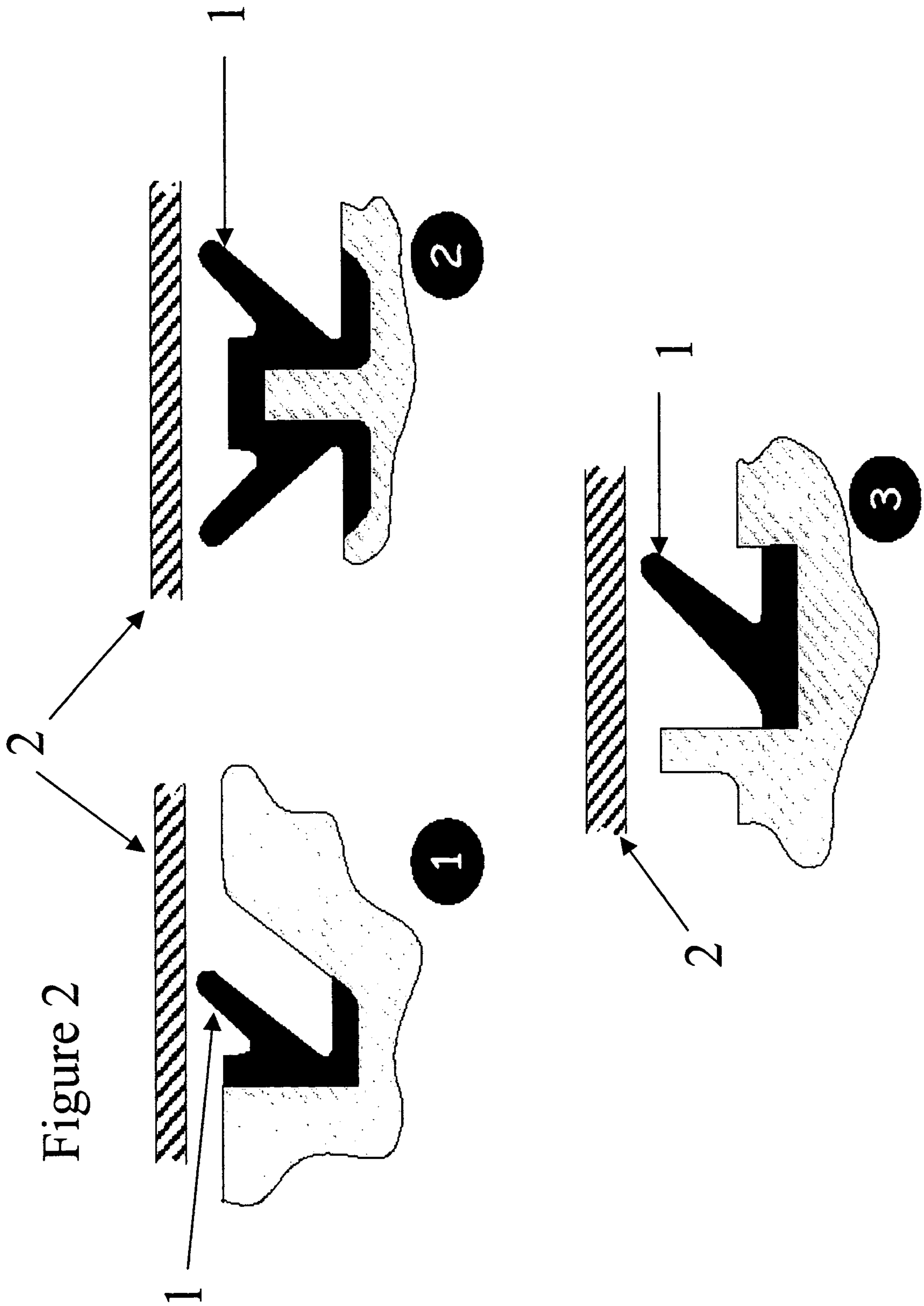


Figure 2

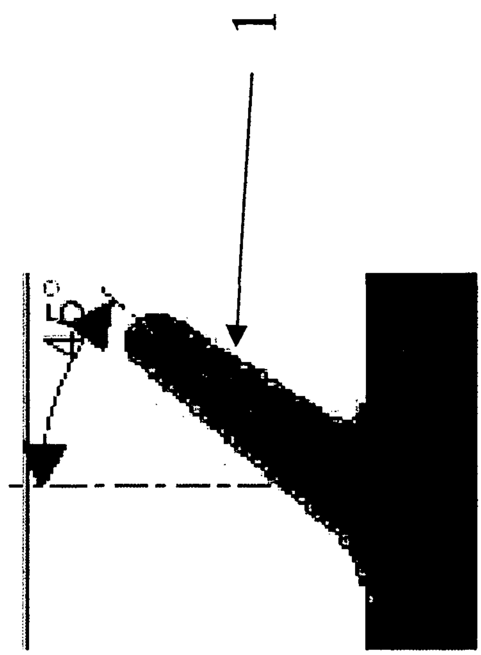


Figure 3

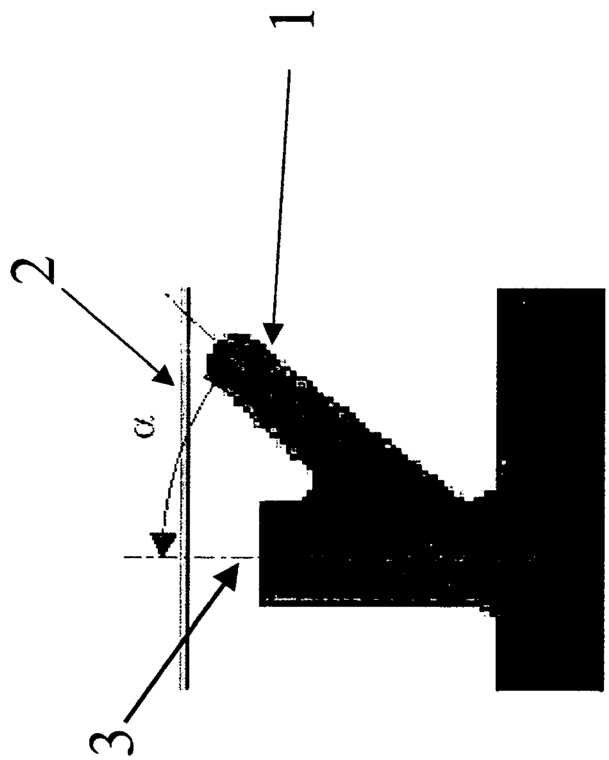


Figure 4

Figure 5

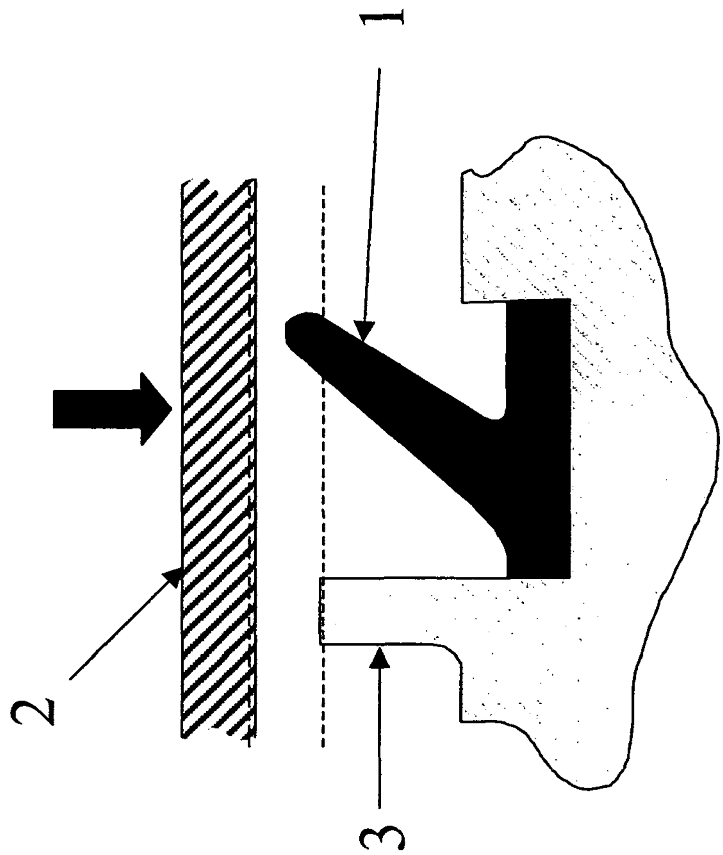

Figure 6

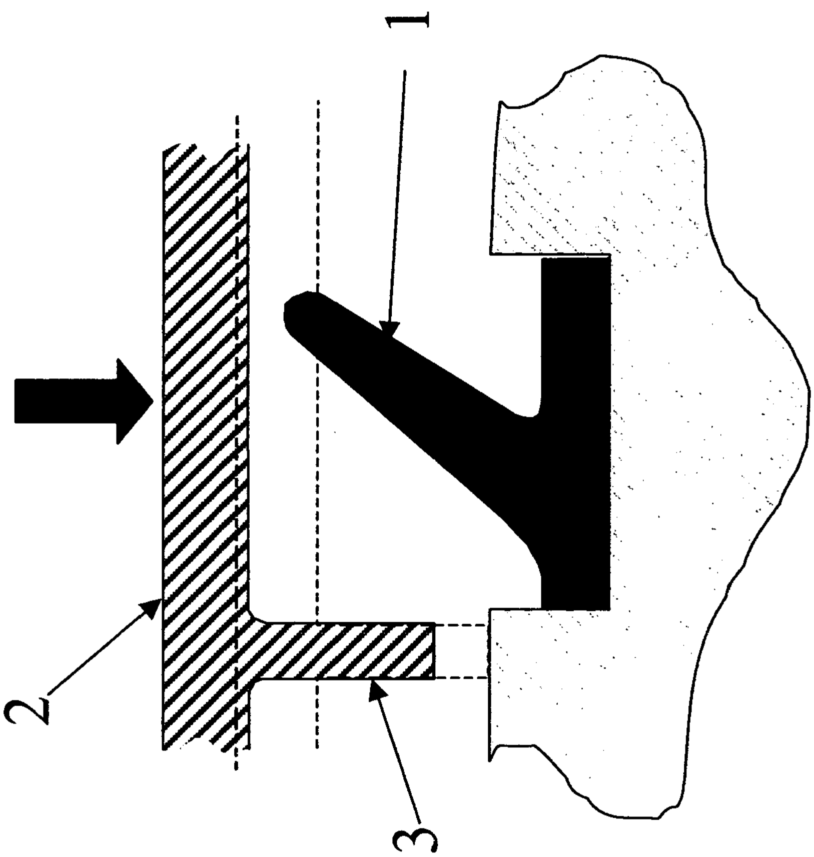

Figure 7

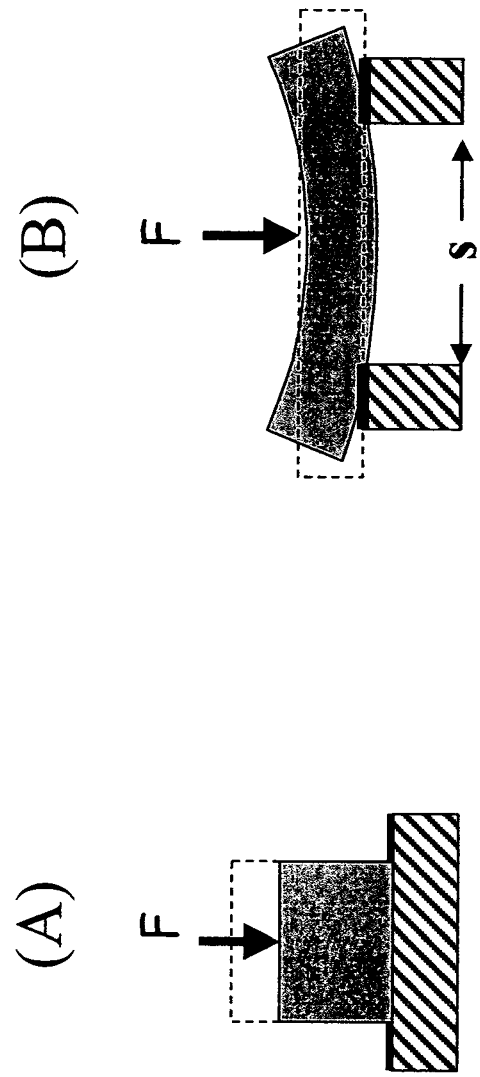

Figure 8

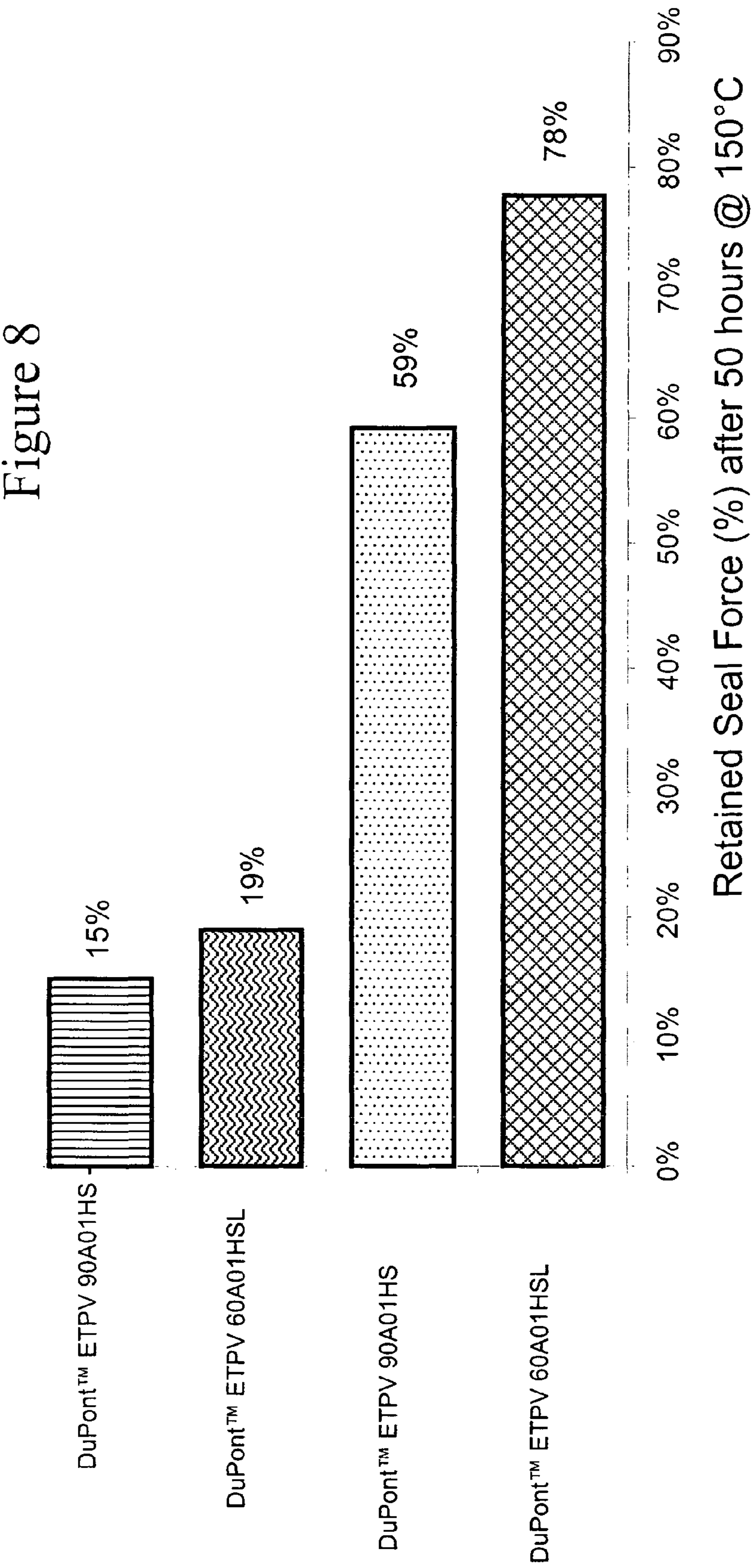
DuPont™ ETPV 90A01HS
DuPont™ ETPV 60A01HSL
DuPont™ ETPV 90A01HS
DuPont™ ETPV 60A01HSL
15%
19%
59%
78%
0%
10%
20%
30%
40%
50%
60%
70%
80%
90%
Retained Seal Force (%) after 50 hours @ 150°C

European Patent Office

# EUROPEAN SEARCH REPORT

Application Number
EP 05 29 0759

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 0 922 730 A (ADVANCED ELASTOMER SYSTEMS, L.P) 16 June 1999 (1999-06-16)<br>* claims 1,2,6,8,9,13-16 * | 1-6,9-14<br>7,8, 15-20 | C09K3/10<br>C08L77/00<br>C08L83/04<br>C08L67/02 |
| A | US 2003/157316 A1 (JYAWOOK SAM M ET AL) 21 August 2003 (2003-08-21)<br>* paragraphs ‘0001!, ‘0009!, ‘0017!, ‘0019!, ‘0021!, ‘0025! *<br>* claims 1,2 * | 1-6,9-14 | |
| A | US 5 334 356 A (BALDWIN ET AL) 2 August 1994 (1994-08-02)<br>* column 6, line 3 - line 15 * | 1 | |
| A | US 6 465 552 B1 (CHORVATH IGOR ET AL) 15 October 2002 (2002-10-15)<br>* the whole document * | 1 | |
| A | US 6 861 171 B1 (SUZUKI DAISUKE) 1 March 2005 (2005-03-01)<br>* the whole document * | 1 | TECHNICAL FIELDS SEARCHED (IPC)<br>C09K<br>C08L |
| D,A | WO 2004/029155 A (E.I. DU PONT DE NEMOURS AND COMPANY) 8 April 2004 (2004-04-08)<br>* claims 23-28 * | 1 | |
| A | US 6 559 633 B1 (NACHTIGAL DANIEL ET AL) 6 May 2003 (2003-05-06)<br>* column 4, line 46 - column 5, line 9 * | 1,9 | |
| D,X | US 4 996 264 A (AONUMA ET AL) 26 February 1991 (1991-02-26)<br>* column 16, lines 33-45 *<br>* claims; examples * | 1,6,9,10 | |

-/--

The present search report has been drawn up for all claims

| Place of search | Date of completion of the search | Examiner |
|---|---|---|
| The Hague | 1 December 2005 | Puetz, C |

4

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 05 29 0759

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | US 6 362 287 B1 (CHORVATH IGOR ET AL) 26 March 2002 (2002-03-26)<br>* column 12, lines 1-6 *<br>* claims; examples *<br>----- | 1,6,9,10 | |
| X | US 6 569 958 B1 (GROSS CRAIG STEVEN ET AL) 27 May 2003 (2003-05-27)<br>* column 15, lines 45-54 *<br>* claims; examples *<br>----- | 1,6,9,10 | |
| A | GB 1 518 639 A (MONSANTO CO) 19 July 1978 (1978-07-19)<br>* the whole document *<br>----- | 1,6,9,10 | |
| | | | TECHNICAL FIELDS SEARCHED (IPC) |

The present search report has been drawn up for all claims

| Place of search | Date of completion of the search | Examiner |
|---|---|---|
| The Hague | 1 December 2005 | Puetz, C |

4

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

Application Number
EP 05 29 0759

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

European Patent Office

# LACK OF UNITY OF INVENTION SHEET B

Application Number
EP 05 29 0759

The Search Division considers that the present European patent application does not comply with the requirements of unity of invention and relates to several inventions or groups of inventions, namely:

1. claims: 1 (in part) ((1),(5),(6), (7) (in part)),2-5, 6 (in part),7,8,9 (in part) ((1),(5),(6), (7) (in part)), 10 (in part),11-20

   Flexion-type static seal comprising a TPV based on polyalkylene phthalate polyester polymer or copolymer, process for making said seal, dual component moulded article comprising said static flexion seal and method for making said moulded article

   ---

2. claims: 1 (in part) ((2),(3),(7) (in part)), 6,9,10 (all in part)

   Flexion-type static seal comprising a TPV based on polyamide resin phthalate, process for making said seal, dual component moulded article comprising said static flexion seal and method for making said moulded article

   ---

3. claims: 1 (in part) ((4),(7)), 6,9,10 (all in part)

   Flexion-type static seal comprising a TPV based on unspecified polyester resin, process for making said seal, dual component moulded article comprising said static flexion seal and method for making said moulded article

   ---

## ANNEX TO THE EUROPEAN SEARCH REPORT ON EUROPEAN PATENT APPLICATION NO. EP 05 29 0759

This annex lists the patent family membersrelating to the patent documents cited in the above-mentioned European search report.
The members are as contained in the European Patent Office EDP file on
The European Patent Office is in no way liable for these particulars which are merely given for the purpose of information.

01-12-2005

| Patent document cited in search report | | Publication date | Patent family member(s) | | | Publication date |
|---|---|---|---|---|---|---|
| EP 0922730 | A | 16-06-1999 | DE | 69815032 | D1 | 03-07-2003 |
| | | | DE | 69815032 | T2 | 01-04-2004 |
| | | | ES | 2194271 | T3 | 16-11-2003 |
| | | | JP | 11246749 | A | 14-09-1999 |
| | | | US | 6329463 | B1 | 11-12-2001 |
| US 2003157316 | A1 | 21-08-2003 | US | 2005193636 | A1 | 08-09-2005 |
| US 5334356 | A | 02-08-1994 | AT | 213259 | T | 15-02-2002 |
| | | | AT | 305488 | T | 15-10-2005 |
| | | | CA | 2107355 | A1 | 06-10-1992 |
| | | | DE | 69232415 | D1 | 21-03-2002 |
| | | | DE | 69232415 | T2 | 26-09-2002 |
| | | | EP | 0580777 | A1 | 02-02-1994 |
| | | | JP | 2625576 | B2 | 02-07-1997 |
| | | | JP | 6506724 | T | 28-07-1994 |
| | | | KR | 171911 | B1 | 30-03-1999 |
| | | | WO | 9217533 | A1 | 15-10-1992 |
| | | | US | 5158986 | A | 27-10-1992 |
| US 6465552 | B1 | 15-10-2002 | WO | 02088254 | A1 | 07-11-2002 |
| US 6861171 | B1 | 01-03-2005 | NONE | | | |
| WO 2004029155 | A | 08-04-2004 | AU | 2003283988 | A1 | 19-04-2004 |
| | | | BR | 0314495 | A | 02-08-2005 |
| | | | CA | 2500141 | A1 | 08-04-2004 |
| | | | EP | 1551920 | A2 | 13-07-2005 |
| US 6559633 | B1 | 06-05-2003 | NONE | | | |
| US 4996264 | A | 26-02-1991 | DE | 3828494 | A1 | 09-03-1989 |
| | | | GB | 2208868 | A | 19-04-1989 |
| | | | JP | 1051449 | A | 27-02-1989 |
| | | | JP | 2065020 | C | 24-06-1996 |
| | | | JP | 7084541 | B | 13-09-1995 |
| US 6362287 | B1 | 26-03-2002 | AT | 275171 | T | 15-09-2004 |
| | | | AU | 4762401 | A | 08-10-2001 |
| | | | CA | 2403839 | A1 | 04-10-2001 |
| | | | CN | 1446249 | A | 01-10-2003 |
| | | | DE | 60105278 | D1 | 07-10-2004 |
| | | | DE | 60105278 | T2 | 01-09-2005 |
| | | | EP | 1274801 | A2 | 15-01-2003 |
| | | | JP | 2003528962 | T | 30-09-2003 |
| | | | MX | PA02009509 | A | 14-10-2003 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 05 29 0759

This annex lists the patent family membersrelating to the patent documents cited in the above-mentioned European search report.
The members are as contained in the European Patent Office EDP file on
The European Patent Office is in no way liable for these particulars which are merely given for the purpose of information.

01-12-2005

| Patent document cited in search report | | Publication date | Patent family member(s) | | | Publication date |
|---|---|---|---|---|---|---|
| US 6362287 | B1 | | TW | 575609 | B | 11-02-2004 |
| | | | WO | 0172903 | A2 | 04-10-2001 |
| | | | US | 2002086937 | A1 | 04-07-2002 |
| US 6569958 | B1 | 27-05-2003 | CN | 1571820 | A | 26-01-2005 |
| | | | EP | 1444298 | A1 | 11-08-2004 |
| | | | JP | 2005507021 | T | 10-03-2005 |
| | | | WO | 03035764 | A1 | 01-05-2003 |
| GB 1518639 | A | 19-07-1978 | AU | 513343 | B2 | 27-11-1980 |
| | | | AU | 2283077 | A | 07-09-1978 |
| | | | BE | 851985 | A1 | 02-09-1977 |
| | | | BR | 7701290 | A | 18-10-1977 |
| | | | CA | 1100671 | A1 | 05-05-1981 |
| | | | CS | 198229 | B2 | 30-05-1980 |
| | | | DD | 129660 | A5 | 01-02-1978 |
| | | | DE | 2709060 | A1 | 08-09-1977 |
| | | | ES | 456406 | A1 | 16-02-1978 |
| | | | FR | 2343018 | A1 | 30-09-1977 |
| | | | IT | 1071314 | B | 02-04-1985 |
| | | | JP | 1028886 | C | 22-01-1981 |
| | | | JP | 52105952 | A | 06-09-1977 |
| | | | JP | 55014096 | B | 14-04-1980 |
| | | | LU | 76881 | A1 | 26-09-1977 |
| | | | NL | 7702165 | A | 06-09-1977 |
| | | | PL | 108002 | B1 | 31-03-1980 |
| | | | SE | 439922 | B | 08-07-1985 |
| | | | SE | 7702309 | A | 03-09-1977 |
| | | | SU | 663314 | A3 | 15-05-1979 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2004029155 A
- US 4996264 A
- US 6362287 B
- US 6569985 B
- US 4981908 A
- US 5824421 A
- US 5731380 A
- US 20040056427 A1
- US 6559633 B
- WO 03089772 A